# EUROPÄISCHE PATENTSCHRIFT

(11) **EP 2 605 924 B1**
(45) Veröffentlichungstag und Bekanntmachung des Hinweises auf die Patenterteilung: **12.11.2014**
(21) Anmeldenummer: 11740568.8
(22) Anmeldetag: 28.07.2011
(51) Int. Cl.: B60G 13/14, F16F 9/12, F16F 15/03

(54) **ELEKTRISCHER DÄMPFER FÜR EIN KRAFTFAHRZEUG**
ELECTRIC DAMPER FOR A MOTOR VEHICLE
AMORTISSEUR ÉLECTRIQUE POUR UN VÉHICULE À MOTEUR

(30) Priorität: 21.08.2010 DE 102010035087
(43) Veröffentlichungstag der Anmeldung: 26.06.2013
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2011/003779
(87) Internationale Veröffentlichungsnummer: WO 2012/031648

(56) Entgegenhaltungen:
- JP-A- 56 140 545
- US-A1- 2010 207 309

## Beschreibung

Die Erfindung betrifft einen elektrischen Dämpfer für ein Kraftfahrzeug nach dem Oberbegriff des Patentanspruches 1.

Ein solcher elektrischer Dämpfer kann an Stelle eines hydraulischen Dämpfers in einem schwingungsfähigen mechanischen System eines Kraftfahrzeugs eingesetzt werden. Wie der hydraulische Dämpfer entzieht auch der elektrische Dämpfer dem schwingungsfähigen System Energie. Diese wird jedoch nicht in thermische Energie umgewandelt. Vielmehr wird mit der Schwingungsenergie ein dem elektrischen Dämpfer zugeordneter Generator angetrieben, der die Schwingungsenergie in elektrische Energie umwandelt, die in das Bordnetz des Kraftfahrzeuges gespeist werden kann.

Aus der DE 101 15 858 A1 ist ein elektrischer Dämpfer für ein Kraftfahrzeug bekannt, der zum Dämpfen mechanischer Schwingungen verwendet wird, die sich zwischen zwei Bauteilen ergeben. Die mechanischen Schwingungen werden in Antriebsmomente umgewandelt, mit denen ein elektrischer Generator zur Erzeugung einer Induktionsspannung antreibbar ist.

Bei dem aus der DE 101 15 858 A1 bekannten elektrischen Dämpfer ist der Wirkungsgrad aufgrund oftmals kleiner bzw. langwelliger Fahrzeuganregung gering. Zudem ist die sich einstellende Drehbewegung des im Generator laufenden Rotors im normalen Fahrbetrieb gering. Aufgrund dieser normalerweise geringen Rotor-Drehbewegung werden jedoch Kraftspitzen, die in speziellen Fahrsituationen auftreten können, wegen der geringen Homogenität des Magnetfeldes im Generator stark wahrgenommen. Zudem ist die Dämpfung hochfrequenter Schwingungsanteile in den mechanischen Schwingungen für den elektrischen Dämpfer problematisch, und zwar im Hinblick auf die thermische Belastung des Dämpfers.

Aus der US 2010/207309 A1 ist ein gattungsgemäßer elektrischer Dämpfer für ein Fahrzeug zur Dämpfung von sich zwischen zwei Bauteilen ergebenden mechanischen Schwingungen bekannt. Durch die Schwingungen sind Antriebsmomente in einer Momentenflussrichtung auf einen elektrischen Generator zur Erzeugung einer Induktionsspannung übertragbar. Aus der JP 56 14 05 45 A ist ein weiterer elektrischer Dämpfer bekannt, der eine Anordnung von Getriebestufen aufweist. Jede dieser Getriebestufen ist als ein Planetengetriebe ausgeführt.

Die Aufgabe der Erfindung besteht darin, einen elektrischen Dämpfer für ein Fahrzeug bereitzustellen, bei dem eine thermische Belastung des elektrischen Dämpfers während des Dämpfungsvorganges reduziert ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 ist dem Generator in der Momentenflussrichtung eine insbesondere hydraulische Dämpfungsstufe vorgeschaltet. Mittels der erfindungsgemäßen Dämpfungsstufe können insbesondere hochfrequente Schwingungsanteile gedämpft werden, bevor diese in den elektrischen Dämpfer eingeleitet werden. Die nur schwer durch den elektrischen Generator zu rekuperierende Energie aus hochfrequenten, kleinen Anregungen wird daher bereits in der hydraulischen Dämpfungsstufe gedämpft. Dies führt zu einem guten Ansprechverhalten des elektrischen Dämpfers und reduziert zudem die thermische Belastung des Generators des elektrischen Dämpfers.

Für den Fall, dass die Dämpfungsstufe hydraulisch arbeitet, kann diese einerseits als ein hydraulisches Dämpfungslager ausgeführt sein, das Arbeitskammem aufweist, die mit einer Dämpfungsflüssigkeit gefüllt sind und über Strömungskanäle miteinander strömungstechnisch verbunden sind. Bei einer Beaufschlagung mit mechanischen Schwingungen wird die Dämpferflüssigkeit zwischen den Arbeitskammern hin- und herbewegt, wodurch insbesondere hochfrequente Schwingungen mit vergleichsweise kleinen Amplituden gedämpft werden.

Erfindungsgemäß ist die hydraulische Dämpfungsstufe jedoch eine Drehkolbenanordnung, bei der ein Drehkolben in einem Dämpfungsgehäuse drehgelagert ist. Zwischen dem Drehkolben und dem radial außenseitigen Dämpfungsgehäuse sind die mit der Dämpferflüssigkeit gefüllten Arbeitskammern gebildet. In Einbaulage kann der Drehkolben gegebenenfalls unter Zwischenschaltung eines geeigneten Getriebes mit den mechanischen Schwingungen beaufschlagt werden. Hochfrequente Schwingungen mit geringen Amplituden können dabei weitgehend in der Drehkolbenanordnung gedämpft werden. Die Drehkolbenanordnung ist insbesondere im Hinblick auf die dazu erforderliche geringe Baulänge sowie im Hinblick auf ein stark reduziertes Bauraumangebot von Vorteil.

Für eine geeignete Bewegungsübertragung von dem ersten, mit den mechanischen Schwingungen beaufschlagten Bauteil ist der hydraulischen Dämpfungsstufe eine erste Getriebestufe vorgeschaltet. Das Übersetzungsverhältnis der ersten Getriebestufe ist dabei so bemessen, dass in der Dämpfungsstufe eine effektive Dämpfung der hochfrequenten Schwingungsanteile durchgeführt werden kann.

Der in Momentenflussrichtung nach der Dämpfungsstufe verbleibende, noch nicht gedämpfte Schwingungsanteil kann in einer Ausführungsvariante direkt in den Generator geleitet werden. Bevorzugt ist es jedoch, wenn zwischen der Dämpfungsstufe und dem Generator in Momentenflussrichtung eine zweite Getriebestufe zwischengeschaltet ist. Das Übersetzungsverhältnis der zweiten Getriebestufe kann dabei bevorzugt so bemessen sein, dass im Generator eine zur Spannungsinduktion geeignete Rotordrehzahl erzielt werden kann. Im Hinblick auf eine Bauraumreduzierung ist es besonders bevorzugt, wenn die beiden Getriebestufen als Planetengetriebe ausgeführt sind, deren Baulänge im Vergleich zu anderen Getriebearten stark reduzierbar ist. In Kombination mit der als Drehkolbenanordnung realisierten Dämpfungsstufe ergibt sich eine besonders kompakte Baueinheit.

Für eine weitere Bauraumreduzierung ist es von Vorteil, wenn der Stator des Generators zugleich als ein Getriebeelement in der ersten Getriebestufe oder in der zweiten Getriebestufe integriert ist. Durch eine solche Konfiguration ergibt sich eine sehr klein bauende Einheit. Darüber hinaus ist das sich durch obige Konfiguration ergebende Funktionsprinzip des elektrischen Dämpfers nicht aus dem oben angegebenen Stand der Technik bekannt, da erfindungsgemäß der Stator kein feststehendes Bauteil ist, sondern vielmehr beim Dämpfungsvorgang selbst aktiv gedreht wird. Die Drehbewegung des Stators wird über die Getriebe- und Dämpfungsstufen zum Rotor des Generators übertragen. Durch entsprechende Getriebeübersetzungen kann der Rotor mit einer im Vergleich zum Stator wesentlich größeren Drehzahl gedreht werden. Dadurch kann der Generator in an sich bekannter Weise die Induktionsspannung erzeugen.

Das erste Bauteil kann beispielhaft ein schwingungsbehaftetes Radführungselement einer Radaufhängung für ein Kraftfahrzeug sein, während das zweite Bauteil der feststehende Fahrzeugaufbau sein kann. Das Radführungselement kann ferner über eine Schwenkachse drehgelenkig mit dem Fahrzeugaufbau verbunden sein. Für eine äußerst kompakte Gestaltung des elektrischen Dämpfers ist es bevorzugt, wenn die Gelenkachse koaxial zur Drehachse des Rotors, der Dämpfungsstufe und/oder der beiden Getriebestufen angeordnet ist.

Im oben angegebenen Fall können die mechanischen Drehschwingungen vom ersten Bauteil unmittelbar in den Stator des Generators eingeleitet werden. Der das erste Bauteil bildende Radführungselement kann hierzu drehfest, etwa im Presssitz, auf dem Stator des Generators sitzen, das heißt drehfest in das Befestigungsauge des Radführungselementes eingesetzt sein.

Zur technischen Realisierung einer oben skizzierten Gelenkstelle mit integriertem elektrischen Dämpfer ist eine bauraumreduzierte Gestaltung des elektrischen Dämpfers vorrangig. Vor diesem Hintergrund ist es bevorzugt, wenn der Stator des Generators zusammen mit dem radial äußeren Hohlrad des Planetengetriebes der ersten Getriebestufe eine einstückige Baueinheit bildet. Das Hohlrad wirkt daher als ein Eingangselement der ersten Getriebestufe. Das Ausgangselement der ersten Getriebestufe kann bevorzugt dagegen das radial innere Sonnenrad sein, das direkt in Verbindung mit der hydraulischen Dämpferstufe ist. Der Planetenradträger des ersten Planetengetriebes kann dagegen drehfest am zweiten, feststehenden Bauteil abgestützt sein.

Das oben erwähnte Ausgangselement des ersten Planetengetriebes kann ferner drehfest mit dem als Eingangselement wirkenden Planetenradträger des Planetengetriebes der zweiten Getriebestufe verbunden sein. Der Planetenradträger des zweiten Planetengetriebes kann dabei in Doppelfunktion zusätzlich noch als Drehkolben ausgeführt sein, der in der hydraulischen Dämpferstufe in einem Dämpfergehäuse drehbar gelagert ist, wie es bereits weiter oben erwähnt ist.

Das Dämpfergehäuse der Drehkolbenanordnung kann bevorzugt am feststehenden zweiten Bauteil, das heißt dem Fahrzeugaufbau, montiert sein.

Mit Bezug auf eine bauraumgünstige Gestaltung kann das Hohlrad des Planetengetriebes der zweiten Getriebestufe drehfest mit dem zweiten, feststehenden Bauteil verbunden sein und besonders bevorzugt unmittelbar in dem Dämpfungsgehäuse integriert sein sowie als Drehmomentstütze wirken. Das Sonnenrad des zweiten Planetengetriebes kann dagegen als Ausgangselement trieblich mit dem Rotor des Generators verbunden sein, um die Antriebsmomente zum Generator zu leiten.

Nachfolgend ist ein Ausführungsbeispiel der Erfindung anhand der beigefügten Fig. beschrieben.

Es zeigen:
- Fig. 1: in grob schematischer Darstellung eine Radaufhängung eines Fahrzeugrades;
- Fig. 2: eine Anlenkstelle eines Radführungselementes der Radaufhängung am Fahrzeugaufbau in teilweiser Explosionsansicht; und
- Fig. 3: in einer schematischen Seitenschnittdarstellung den am Fahrzeugaufbau befestigten elektrischen Dämpfer, auf dem das Radführungselement drehfest montiert ist.

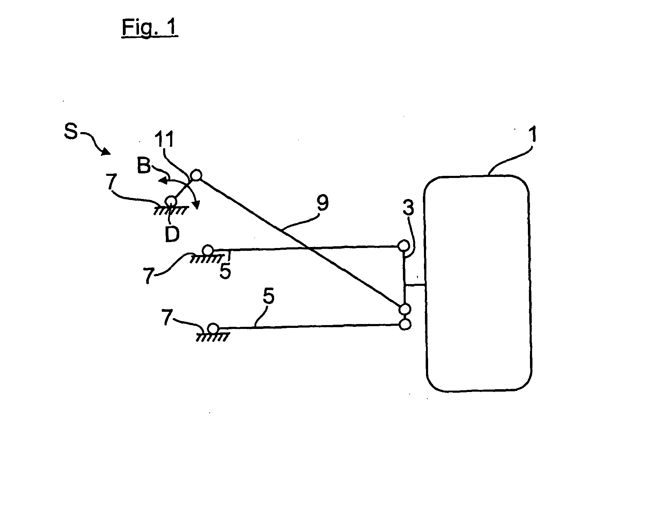

In der Fig. 1 ist die Radaufhängung eines Fahrzeugrades 1 eines Kraftfahrzeuges gezeigt. Das Fahrzeugrad 1 ist an einem Radträger 3 drehgelagert. Der Radträger 3 ist über Querlenker 5 am Fahrzeugaufbau 7 angelenkt. Zusätzlich wirkt ein Schräglenker 9 auf den Radträger 3, der über eine Koppel 11 mit dem Fahrzeugaufbau 7 verbunden ist. Die Koppel 11 ist in der Fig. 1 an einer Anlenkstelle S um eine Schwenkachse D drehgelenkig mit dem Fahrzeugaufbau 7 verbunden.

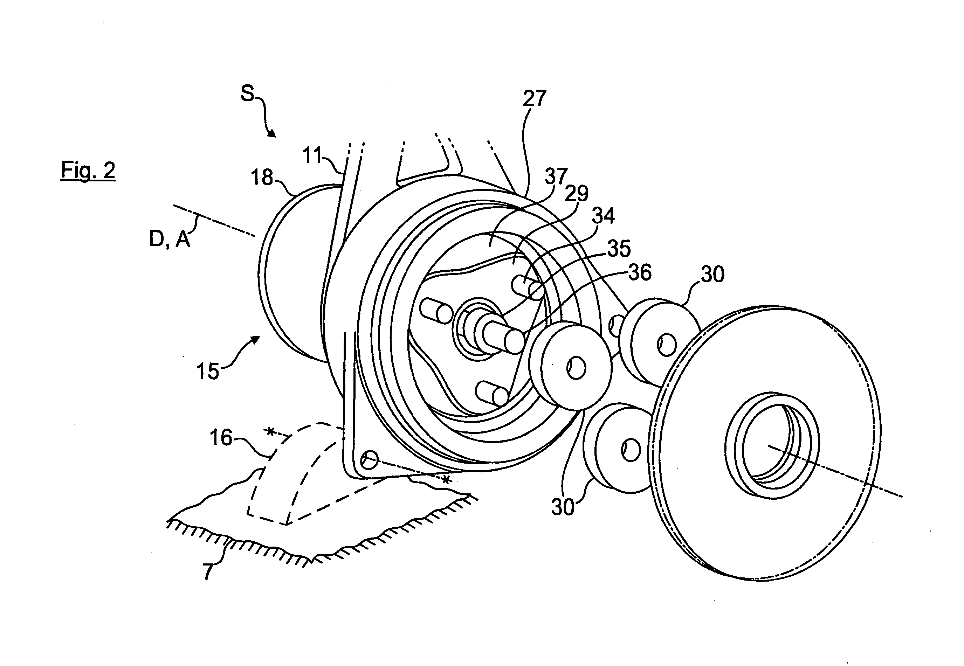

In der Fig. 2 ist die Anlenkstelle S zwischen der Koppel 11 und dem Fahrzeugaufbau 7 vergrößert und in teilweiser Explositionsdarstellung gezeigt. Die Koppel 11 weist ein Befestigungsauge 13 auf, das über einen elektrischen Dämpfer 15 an einer nur gestrichelt angedeuteten Haltekonsole 16 befestigt ist, wie es in der Fig. 2 gezeigt ist.

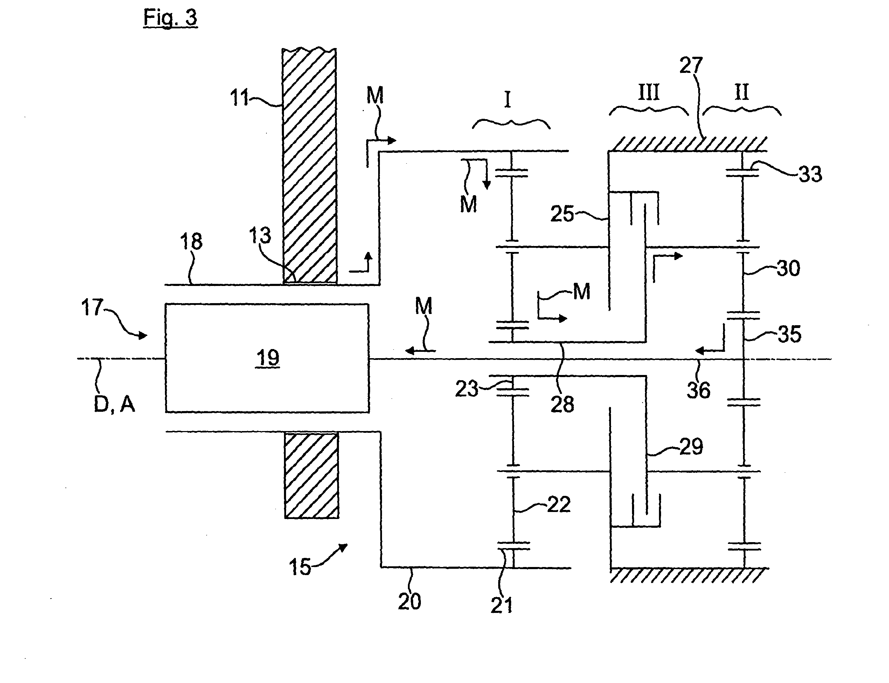

Der elektrische Dämpfer 15 weist gemäß der Fig. 3 einen Innenpolgenerator 17 auf, der einen radial äußeren Stator 18 sowie einen damit zusammenwirkenden Rotor 19 enthält. Der in etwa hohlzylindrisch ausgeführte Stator 18 trägt an seiner Innenseite nicht näher gezeigte Induktionswicklungen, die mit ebenfalls nicht dargestellten Elektromagneten des Rotors 19 zusammenwirken. Gemäß der Fig. 2 und 3 trägt der Stator 18 an seiner äußeren Umfangsseite im Presssitz die Koppel 11. Alternativ zur Ausführung als Innenpolgenerator können die Wicklungen auch auf dem Rotor sitzen und die Feldmagnete auf dem Stator sitzen.

Wie aus der Fig. 3 hervorgeht, ist der Stator 18 über zwei Getriebestufen I, II sowie einer dazwischen geschalteten hydraulischen Dämpferstufe III trieblich mit dem Rotor 19 des Generators 17 in Verbindung. Hierzu ist der Stator 18 gemäß der Fig. 3 zum rechten Bildrand durch ein Hohlrad 20 nach rechts verlängert. Das im Vergleich zum Stator 18 im Durchmesser größere Hohlrad 20 schließt in Axialrichtung über eine Abstufung an den Stator 18 an und bildet ein Momenten-Eingangselement der als Planetengetriebe gestalteten Getriebestufe I.

In der als Planetengetriebe ausgeführten Getriebestufe I kämmt das Hohlrad 20 mit seiner Innenverzahnung 21 mit Planetenrädern 22. Diese sind wiederum in Zahneingriff mit einem Sonnenrad 23, das koaxial zur Drehachse A des Rotors 19 angeordnet ist. Die Planetenräder 22 der ersten Getriebestufe I sind gemäß der Fig. 3 an einem Planetenradträger 25 drehbar gelagert. Dieser ist wiederum drehfest an einem feststehenden Dämpfungsgehäuse 27 angeformt, das über die bereits genannten Haltekonsolen 16 am Fahrzeugaufbau 7 montiert ist.

Das Sonnenrad 23 der ersten Getriebestufe I wird drehfest von einer Hohlwelle 28 getragen, auf deren, in der Fig. 3 rechten Stirnseite ein Planetenradträger 29 der zweiten Getriebestufe II angeformt ist. Die zweite Getriebestufe II ist, wie auch die erste Getriebestufe I, als Planetengetriebe ausgeführt, wobei die Planetenräder 30 radial außen mit einer Innenverzahnung 33 des fest am Fahrzeugaufbau 7 montierten Dämpfungsgehäuses 27 kämmen. Das mit den Planetenrädern 30 in Zahneingriff befindliche Sonnenrad 35 der zweiten Getriebestufe II bildet das Momenten-Ausgangselement. Gemäß der Fig. 3 ist das Sonnenrad 35 ferner über eine koaxial durch die Hohlwelle 28 geführte Antriebswelle 36 mit dem Rotor 19 des Generators 17 trieblich verbunden.

Wie aus der Fig. 3 weiter hervorgeht, dient demgegenüber der Planeten-radträger 29 der zweiten Getriebestufe II als ein Eingangselement, über das Antriebsmomente in die zweite Getriebestufe II eingeleitet werden. In Doppelfunktion ist der Planetenradträger 29 nicht nur das Eingangselement der zweiten Getriebestufe II, sondern auch Bestandteil der Dämpfungsstufe III. Diese ist im vorliegenden Ausführungsbeispiel als eine hydraulische Drehkolbenanordnung ausgeführt, wie sie in der Fig. 2 veranschaulicht ist. Demzufolge ist der Planetenradträger 29 als ein scheibenförmiger Drehkolben in dem Dämpfungsgehäuse 27 drehgelagert. Zwischen der Innenseite des Dämpfungsgehäuses 27 und dem in etwa dreieckförmig mit abgerundeten Winkeln gestalteten Planetenradträger 29 sind insgesamt drei Arbeitskammern 37 definiert. Diese sind über nicht dargestellte Strömungskanäle miteinander verbunden. Die Arbeitskammern 37 sind außerdem mit einem Dämpferfluid gefüllt.

Gemäß der Fig. 2 sind außerdem die auf dem Planetenradträger 29 befindlichen Achszapfen 39 ersichtlich, auf denen die Planetenräder 30 der zweiten Getriebestufe II drehgelagert sind. Diese sind, wie bereits erwähnt, mit einer in der Fig. 2 nicht dargestellten Innenverzahnung 33 des Dämpfungsgehäuses 27 in Zahneingriff. Zudem zeigt die Fig. 2 das Sonnenrad 35 der zweiten Getriebestufe II, die über die Antriebswelle 36 auf den in der Fig. 2 nicht dargestellten Rotor 19 abtreibt. Die Antriebswelle 36 ist dabei gemäß den Fig. 2 und 3 koaxial zur Schwenkachse D der Anlenkstelle 5.

Während des Fahrbetriebs wird die Koppel 11 mit betriebsbedingten, mechanischen Schwingungen beaufschlagt, die in Drehschwingungen B der Koppel 11 mit Bezug auf die Schwenkachse D resultieren. Durch diese Drehschwingungen B wird der Stator 18 mit Antriebsmomenten angetrieben. Diese Antriebsmomente werden in einer Momentenflussrichtung M über das Hohlrad 20 in die erste Getriebestufe I eingeleitet. Deren Übersetzungsverhältnis ist so bemessen, dass sich in der, in der Momentenflussrichtung M nachgeschalteten Dämpfungsstufe III eine effektive Dämpfung von insbesondere den hochfrequenten Schwingungsanteilen ergibt. Über das als Ausgangselement dienende Sonnenrad 23 werden die Antriebsmomente durch den Planetenradträger 29 in die zweite Getriebestufe II eingeleitet. Die hydraulische Dämpfung erfolgt dabei, wie oben erwähnt, unmittelbar am Planetenradträger 29 der zweiten Getriebestufe.

Das Übersetzungsverhältnis der, der Dämpfungsstufe III nachgeschalteten zweiten Getriebestufe II ist dabei so bemessen, dass sich auch bei kleinen bzw. langwelligen mechanischen Schwingungen eine, für eine effektive Spannungsinduktion geeignete Rotordrehzahl ergibt.

## Patentansprüche

1. Elektrischer Dämpfer für ein Fahrzeug zur Dämpfung von sich zwischen zwei Bauteilen (7, 11) ergebenden, mechanischen Drehschwingungen (B), durch die Antriebsmomente in einer Momentenflussrichtung (M) auf einen elektrischen Generator (17) zur Erzeugung einer Induktions-spannung übertragbar sind, **dadurch gekennzeichnet, dass** dem Generator (17) in der Momentenflussrichtung (M) eine hydraulische Dämpfungsstufe (III) vorgeschaltet ist, die hochfrequente Drehschwingungsanteile dämpft, und dass die hydraulische Dämpfungsstufe (III) eine Drehkolbenanordnung ist, bei der ein Drehkolben (29) in einem Dämpfungsgehäuse (20) drehgelagert ist, und zwischen dem Drehkolben (29) und dem Dämpfungsgehäuse (20) mit einem Dämpferfluid gefüllte Arbeitskammern (37) gebildet sind, wobei das Dämpferfluid infolge der mechanischen Drehschwingungen (B) zwischen den Arbeitskammern (37) hin- und herströmt, und dass der hydraulischen Dämpfungsstufe (III) eine Getriebestufe (I) vorgeschaltet ist, deren Übersetzungsverhältnis so bemessen ist, dass in der Dämpfungsstufe (III) eine effektive Dämpfung der hochfrequenten Drehschwingungsanteile durchführbar ist.

2. Elektrischer Dämpfer nach Anspruch 1, **dadurch gekennzeichnet, dass** der Dämpfungsstufe (III) eine zweite Getriebestufe (II) nachgeschaltet ist, deren Übersetzungsverhältnis so bemessen ist, dass im Generator (17) eine zur Spannungsinduktion geeignete Rotordrehzahl erzielbar ist.

3. Elektrischer Dämpfer nach Anspruch 1 oder 2, **dadurch gekennzeichnet, dass** die erste und/oder die zweite Getriebestufe (I, II) als Planetengetriebe ausgeführt sind.

4. Elektrischer Dämpfer nach einem der Ansprüche 1, 2 oder 3, **dadurch gekennzeichnet, dass** der Stator (18) des Generators (17) als ein Getriebeelement in der ersten Getriebestufe (I) oder in der zweiten Getriebestufe (II) integriert ist.

5. Elektrischer Dämpfer nach Anspruch 4, **dadurch gekennzeichnet, dass** die mechanischen Drehschwingungen (B) vom ersten Bauteil (11) in den Stator (18) des Generators (17) einleitbar sind, wobei insbesondere der Stator (18) des Generators (17) drehfest mit dem ersten Bauteil (11) verbunden ist, und insbesondere der Stator (18) drehfest in einem Befestigungsauge (13) des ersten Bauteils (11) eingesetzt ist.

6. Elektrischer Dämpfer nach einem der Ansprüche 4 oder 5, **dadurch gekennzeichnet, dass** das radial äußere Hohlrad (20) des Planetengetriebes der ersten Getriebestufe (I) und der Stator (18) des Generators (17) eine einstückige Baueinheit bilden, und/oder das Hohlrad (20) das Eingangselement des Planentengetriebes ist, über das Antriebsmomente in die erste Getriebestufe (I) einleitbar sind.

7. Elektrischer Dämpfer nach Anspruch 6, **dadurch gekennzeichnet, dass** das radial innere Sonnenrad (23) des Planetengetriebes der ersten Getriebestufe (I) als Ausgangselement wirkt, das mit der Dämpferstufe (III) in Verbindung ist.

8. Elektrischer Dämpfer nach Anspruch 7, **dadurch gekennzeichnet, dass** der Planetenradträger (25) des Planetenradgetriebes der ersten Getriebestufe (I) drehfest am zweiten Bauteil (7) abgestützt ist.

9. Elektrischer Dämpfer nach Anspruch 7 oder 8, **dadurch gekennzeichnet, dass** das Sonnenrad (23) der ersten Getriebestufe (I) drehfest mit dem als Eingangselement wirkenden Planetenradträger (29) des Planetengetriebes der zweiten Getriebestufe (II) verbunden ist.

10. Elektrischer Dämpfer nach einem der Ansprüche 3 bis 9, **dadurch gekennzeichnet, dass** der Planetenradträger (29) der zweiten Getriebestufe (II) als Drehkolben der hydraulischen Dämpferstufe (III) ausgebildet ist.

11. Elektrischer Dämpfer nach einem der Ansprüche 3 bis 10, **dadurch gekennzeichnet, dass** das Hohlrad (27) des Planetengetriebes der zweiten Getriebestufe (II) drehfest am zweiten Bauteil (7) abgestützt ist.

12. Elektrischer Dämpfer nach einem der Ansprüche 3 bis 11, **dadurch gekennzeichnet, dass** das Sonnenrad (35) des Planetengetriebes der zweiten Getriebestufe (II) als Ausgangselement wirkt, das über eine Antriebswelle (36) mit dem die Antriebsmomente (M) zum Rotor (19) des Generators (17) verbunden ist.

13. Elektrischer Dämpfer nach einem der vorhergehenden Ansprüche, **dadurch gekennzeichnet, dass** das schwingungsbehaftete erste Bauteil (11) ein Radführungselement ist, und das feststehende zweite Bauteil (7) der Fahrzeugaufbau ist, an dem das Radführungselement um eine Drehachse (D) gelenkig abgestützt ist, wobei insbesondere die Drehachse (D) koaxial zur Drehachse (A) des Rotors (19), der Dämpfungsstufe (III) und/oder der beiden Getriebestufen (I, II) angeordnet ist.

## Claims

1. Electric damper for a motor vehicle for damping mechanical torsional vibrations (B) occurring between two components (7, 11) through which driving torques can be transferred in a torque flow direction (M) to an electric generator (17) in order to generate an induction voltage, **characterised in that** a hydraulic damping stage (III) is connected upstream of the generator (17) in the torque flow direction (M), which stage damps high-frequency portions of the torsional vibrations, and **in that** the hydraulic damping stage (III) is a rotary piston arrangement in which a rotary piston (29) is rotatably mounted in a damping housing (20), and working chambers (37) filled with a damping fluid are formed between the rotary piston (29) and the damping housing (20), the damping fluid flowing back and forth between the working chambers (37) as a result of the mechanical torsional vibrations (B), and **in that** a gear stage (I) is connected upstream of the hydraulic damping stage (III), the transmission ratio of which gear stage is such that effective damping of the high-frequency portions of the torsional vibrations can be carried out in the damping stage (III).

2. Electric damper according to claim 1, **characterised in that** a second gear stage (II) is connected downstream of the damping stage (III), the transmission ratio of which second gear stage is such that a rotor speed suitable for inducing voltage can be achieved in the generator (17).

3. Electric damper according to either claim 1 or claim 2, **characterised in that** the first and/or the second gear stage (I, II) take the form of a planetary gear train.

4. Electric damper according to any of claims 1, 2 or 3, **characterised in that** the stator (18) of the generator (17) is integrated into the first gear stage (I) or into the second gear stage (II) as a gear element.

5. Electric damper according to claim 4, **characterised in that** the mechanical torsional vibrations (B) from the first component (11) can be introduced into the stator (18) of the generator (17), the stator (18) of the generator (17) being in particular rotationally engaged with the first component (11), and the stator (18) being in particular non-rotationally inserted in a fixing eye (13) of the first component (11).

6. Electric damper according to either claim 4 or claim 5, **characterised in that** the radially outer ring gear (20) of the planetary gear train of the first gear stage (I) and the stator (18) of the generator (17) form a single-piece unit and/or the ring gear (20) is the input element of the planetary gear train, via which driving torques can be introduced into the first gear stage (I).

7. Electric damper according to claim 6, **characterised in that** the radially inner sun gear (23) of the planetary gear train of the first gear stage (I) functions as an output element which is connected to the damping stage (III).

8. Electric damper according to claim 7, **characterised in that** the planet gear carrier (25) of the planetary gear train of the first gear stage (I) is non-rotationally supported on the second component (7).

9. Electric damper according to either claim 7 or claim 8, **characterised in that** the sun gear (23) of the first gear stage (I) is rotationally engaged with the planet gear carrier (29) of the planetary gear train of the second gear stage (II), which carrier functions as an input element.

10. Electric damper according to any of claims 3 to 9, **characterised in that** the planet gear carrier (29) of the second gear stage (II) is formed as a rotary piston of the hydraulic damping stage (III).

11. Electric damper according to any of claims 3 to 10, **characterised in that** the ring gear (27) of the planetary gear train of the second gear stage (II) is non-rotationally supported on the second component (7).

12. Electric damper according to any of claims 3 to 11, **characterised in that** the sun gear (35) of the planetary gear train of the second gear stage (II) functions as an output element which is connected via an actuator (36) by means of which the driving torques (M) to the rotor (19) of the generator (17).

13. Electric damper according to any of the preceding claims, **characterised in that** the first component (11), which is subjected to vibrations, is a wheel guidance element and the stationary second component (7) is the vehicle body on which the wheel guidance element is supported in an articulated manner about an axis of rotation (D), in particular the axis of rotation (D) being arranged coaxially with the axis of rotation (A) of the rotor (19), the damping stage (III) and/or the two gear stages (I, II).

## Revendications

1. Amortisseur électrique pour un véhicule afin d'amortir les vibrations torsionnelles mécaniques (B) se produisant entre deux éléments structurels (7, 11), par lesquels des couples d'entraînement sont transmissibles dans une direction d'écoulement de couples (M) sur un générateur électrique (17) pour la production d'une tension d'induction, **caractérisé en ce que**, en amont du générateur (17), dans la direction d'écoulement de couples (M), est commuté un étage d'amortissement hydraulique (III), qui amortit les fractions de vibrations torsionnelles très fréquentes, et l'étage d'amortissement hydraulique (III) est un aménagement à piston rotatif, dans lequel un piston rotatif (29) est monté à rotation dans un boîtier d'amortissement (20), tandis que des chambres de travail remplies d'un fluide d'amortissement sont formées entre le piston rotatif (29) et le boîtier d'amortissement (20), dans lequel le fluide d'amortissement s'écoule dans un sens ou l'autre entre les chambres de travail (37) à la suite des vibrations torsionnelles mécaniques (B), et en amont de l'étage d'amortissement hydraulique (III) est commuté un étage de transmission (I) dont le rapport de vitesse est tel qu'un amortissement efficace des fractions de vibrations torsionnelles très fréquentes puisse être assuré dans l'étage d'amortissement (III).

2. Amortisseur électrique selon la revendication 1, **caractérisé en ce qu'**en aval de l'étage d'amortissement (III) est commuté un second étage de transmission (II) dont le rapport de vitesse est tel qu'une vitesse de rotation du rotor convenant à l'induction d'une tension puisse être obtenue dans le générateur (17).

3. Amortisseur électrique selon la revendication 1 ou la revendication 2, **caractérisé en ce que** le premier et/ou le second étage de transmission (I, II) se présente (nt) sous la forme d'un engrenage planétaire.

4. Amortisseur électrique selon l'une quelconque des revendications 1, 2 ou 3, **caractérisé en ce que** le stator (18) du générateur (17) est intégré sous la forme d'un élément de transmission au premier étage de transmission (I) ou au second étage de transmission (II).

5. Amortisseur électrique selon la revendication 4, **caractérisé en ce que** les vibrations torsionnelles mécaniques (B) peuvent être induites par le premier élément structurel (11) dans le stator (18) du générateur (17), dans lequel en particulier le stator (18) du générateur (17) est relié au premier élément structurel (11) solidaire en rotation et, en particulier, le stator (18) est enfoncé dans un oeillet de fixation (13) du premier élément structurel (11) de manière solidaire en rotation.

6. Amortisseur électrique selon l'une quelconque des revendications 4 ou 5, **caractérisé en ce que** la couronne radialement externe (20) de l'engrenage planétaire du premier étage de transmission (I) et le stator (18) du générateur (17) forment une unité structurelle d'un seul tenant et/ou la couronne (20) est l'élément d'entrée de l'engrenage planétaire, par lequel les couples d'entraînement sont induits dans le premier étage de transmission (I).

7. Amortisseur électrique selon la revendication 6, **caractérisé en ce que** la roue solaire radialement interne (23) de l'engrenage planétaire du premier étage de transmission (I) agit comme élément de sortie qui est relié à l'étage d'amortissement (III).

8. Amortisseur électrique selon la revendication 7, **caractérisé en ce que** le porte-satellites (25) de l'engrenage planétaire du premier étage de transmission (I) s'appuie sur le second élément structurel (7) de manière solidaire en rotation.

9. Amortisseur électrique selon la revendication 7 ou la revendication 8, **caractérisé en ce que** la roue solaire (23) du premier étage de transmission (II) est reliée solidaire en rotation au porte-satellites (29) de l'engrenage planétaire du second étage de transmission (II) agissant comme élément d'entrée.

10. Amortisseur électrique selon l'une quelconque des revendications 3 à 9, **caractérisé en ce que** le porte-satellites (29) du second étage de transmission (II) se présente sous la forme d'un piston rotatif de l'étage d'amortissement hydraulique (III).

11. Amortisseur électrique selon l'une quelconque des revendications 3 à 10, **caractérisé en ce que** la couronne (27) de l'engrenage planétaire du second étage de transmission (II) s'appuie solidaire en rotation sur le second élément structurel (7).

12. Amortisseur électrique selon l'une quelconque des revendications 3 à 11, **caractérisé en ce que** la roue solaire (35) de l'engrenage planétaire du second étage de transmission (II) agit comme élément de sortie qui est relié via un arbre d'entraînement (36) au rotor (19) du générateur (17) ... les couples d'entraînement (M).

13. Amortisseur électrique selon l'une quelconque des revendications précédentes, **caractérisé en ce que** le premier élément structurel (11) sujet à des vibrations est un élément de guidage de roues et le second élément structurel fixe (7) est la structure du véhicule sur laquelle l'élément de guidage de roues s'appuie en articulation autour d'un axe de rotation (D), dans lequel en particulier l'axe de rotation (D) est agencé coaxialement à l'axe de rotation (A) du rotor (19), de l'étage d'amortissement (III) et/ou des deux étages de transmission (I, II).
